# EUROPÄISCHE PATENTSCHRIFT

(11) **EP 2 130 289 B1**
(45) Veröffentlichungstag und Bekanntmachung des Hinweises auf die Patenterteilung: **10.04.2019**
(21) Anmeldenummer: 08716008.1
(22) Anmeldetag: 25.02.2008
(51) Int. Cl.: H02K 11/00, H02K 9/06

(54) **ELEKTROMOTOR**
ELECTRIC MOTOR
MOTEUR ÉLECTRIQUE

(30) Priorität: 28.02.2007 DE 102007010004
(43) Veröffentlichungstag der Anmeldung: 09.12.2009
(73) Patentinhaber: SEW-EURODRIVE GmbH & Co. KG, 76646 Bruchsal (DE)
(72) Erfinder: PFANN, Jochen, 76189 Karlsruhe (DE); SIMON, Olaf, 76646 Bruchsal (DE); WOLF, Christian, 76344 Eggenstein-Leopoldshafen (DE)
(86) Internationale Anmeldenummer: PCT/EP2008/001462
(87) Internationale Veröffentlichungsnummer: WO 2008/104345

(56) Entgegenhaltungen:
- EP-A- 1 511 157
- EP-A- 1 589 641
- WO-A-2006/136585
- US-A1- 2004 090 132

## Beschreibung

Die Erfindung betrifft einen Elektromotor.

Aus der DE 103 40 325 A1 ist ein Elektromotor bekannt, bei dem Sensoren mit einem am Lüfter vorgesehenen Ring abwechselnder Magnetisierung zusammenwirken zur Drehzahlbestimmung.

Aus der EP 1 511 157 A2 ist ein Lüftermotor bekannt, bei dem auf dem Lüfter ein Polring angordnet ist und im axialen Bereich des Lüfters eine elekttronischen Schaltung, die Sensoren zur Erfassung der vom Polring erzeugten Magnetfelder aufweist.

Aus der WO 2006/136585 A1 ist ein Lüfter bekannt, bei dem Magnete von einem Rückschlussring gehalten sind und an ihrer restlichen Oberfläche mit Kunststoff umspritzt sind.

Aus der EP 1 589 641 A2 ist ein Gleichstrommotor bekannt.

Der Erfindung liegt daher die Aufgabe zugrunde, einen Elektromotor mit Winkelbezogener Messwerterfassung weiterzubilden, wobei die Herstellung vereinfacht sein soll.

Erfindungsgemäß wird die Aufgabe bei dem Elektromotor nach den in Anspruch 1 angegebenen Merkmalen gelöst.

Wichtige Merkmale der Erfindung bei dem Elektromotor sind, dass er eine Bremse und einen Lüfter umfasst, wobei der Lüfter, umfassend Grundkörper und darauf vorgesehene Lüfterflügel, einstückig als Spritzgussteil ausgeführt ist und im Lüfter Dauermagnete umspritzt vorgesehen sind,
wobei axial beabstandet vom Lüfter eine elektronische Schaltung vorgesehen ist, die mittels Haltemitteln am Motorflansch befestigt ist, der mit dem Statorgehäuse des Motors verbunden ist.

Von Vorteil ist dabei, dass die Magnete schon bei der Herstellung des Spritzgusses des Lüfters eingebracht werden und somit der Lüfter in einfacher Weise herstellbar, die Magnete schützbar und durch Wahl der Magnete als Dauermagnete sehr starke Magnetfelder erzeugbar sind. Außerdem ist die elektronische Schaltung eng am Lüfter vorsehbar und somit ein gutes Signal-Rausch-Verhältnis erreichbar. Die elektronische Schaltung ist mittels der Haltemitteln am Motorflansch haltbar und daher an einem festen stabilen Teil des Motors befestigbar. Außerdem ist somit eine sehr gute elektrische Masseverbindung gegeben.

Erfindungsgemäß erstrecken sich die Haltemittel über einen größeren axialen Bereich als die Bremse. Somit wird die Bremse in axialer Richtung überbrückt. Bei Wartung oder Reparatur der Bremse bleibt die elektronische Schaltung oder zumindest ihre Justierung relativ zum Lüfter unbeeinflusst.

Bei einer vorteilhaften Ausgestaltung ist die elektronische Schaltung mit einem Halteblech lösbar verbunden, das mit den Haltemitteln verbunden ist. Von Vorteil ist dabei, dass das Halteblech nicht nur die Stabilität sondern auch die magnetische Abschirmung gegen Störfelder aus der Bremse oder aus dem Stator des Motors verbessert.

Bei einer vorteilhaften Ausgestaltung sind die Haltemittel in den Motorflansch eingeschraubt vorgesehen, insbesondere wobei die Haltemittel als Stegbolzen ausgeführt sind. Von Vorteil ist dabei, dass einfache kostengünstige Mittel verwendbar sind.

Bei einer vorteilhaften Ausgestaltung umfasst die elektronische Schaltung Sensoren zur Detektion der von den Dauermagneten erzeugten Magnetfelder. Von Vorteil ist dabei, dass die elektronische Schaltung schon mit Auswerteelektronik ausführbar ist, die die Sensorsignale verarbeitbar und auswertbar macht. Somit ist eine winkelbezogene Messwerterfassung, wie beispielsweise Bestimmung der Winkellage und/oder der Anzahl von Umdrehungen, ausführbar.

Bei einer vorteilhaften Ausgestaltung sind Mittel zur Bestimmung der Winkellage und/oder der Anzahl von Umdrehungen des Lüfters vorgesehen, insbesondere sind sie von der elektronischen Schaltung umfasst oder im Anschlusskasten des Motors vorgesehen. insbesondere sind die Mittel zur Bestimmung aus dem vorbeidrehenden Magneten versorgbar, insbesondere umfassen sie Wiegandsensoren und/oder elektronische Schaltung in FRAM Technik. Von Vorteil ist dabei, dass die Magnete durch ihre Nähe an der Oberfläche des Lüfters derart starke Magnetfelder im bereich der Wiegandsensoren erzeugen, dass aus diesen heraus die elektronische Schaltung samt in FRAM-Technik ausgeführte Auswerteelektronik versorgbar ist. Denn die in FRAM Technik ausgeführten Schaltkreise benötigen sehr wenig Energie. Daher genügt der aus den Wiegandsensoren, also Impulsdrahtsensoren, stammende Energiepuls zur Versorgung zumindest eines Umdrehungszählers in der elektronischen Schaltung, der die absolute Umdrehungszahl des Lüfters feststellbar macht.

Bei einer vorteilhaften Ausgestaltung sind die elektrischen Leitungen der elektronischen Schaltung, umfassend die Leitungen zur Herausführung der detektierten Sensorsignale oder die Leitung zur Herausführung der Information über Winkellage und/oder Anzahl von Umdrehungen, in die Bremse geführt und sind mit den die Bremse versorgenden und/oder steuernden Leitungen in den Anschlusskasten geführt. Von Vorteil ist dabei, dass nur eine Ausnehmung in einem gehäusebildenden Teil der Bremse vorzusehen ist, um dann zur Weiterführung der Leitungen gemeinsam mit den Leitungen der Bremse die hierfür sowieso vorgesehenen Ausnehmungen im Motorgehäuse, umfassend Statorgehäuse, Anschlusskaste und/oder Motorflansch zu verwenden.

Bei einer vorteilhaften Ausgestaltung weist der Anschlusskasten des Motors eine Ausnehmung auf zur Durchführung einer Busleitung und/oder der Anschlusskasten einen elektronische Schaltung mit der Funktionalität eines Umrichters, Sanftanlaufgeräts und/oder Motorschalters. Von Vorteil ist dabei, dass die Information über die Winkellage und/oder Anzahl der Umdrehungen an weitere elektronische Geräte übermittelbar ist.

Bei einer vorteilhaften Ausgestaltung versorgt der Umrichter den Motor und umfasst einen Drehzahlregler, dem die Informationen aus der die Sensoren umfassenden elektronischen Schaltung als Istwert zugeführt wird. Von Vorteil ist dabei, dass ein kostengünstiger Winkelsensor zu Steuerung eines Motors verwendbar ist.

Bei einer vorteilhaften Ausgestaltung sind die Magnetisierungsrichtung der Magnete in radialer Richtung vorgesehen, insbesondere wobei nächstbenachbarte Magnete entgegengesetzte Magnetisierungsrichtung aufweisen. Von Vorteil ist dabei, dass die Wiegandsensoren entsprechend radial anordenbar sind und somit der Motor insbesondere in axialer Richtung sehr kompakt ausführbar ist.

Bei einer vorteilhaften Ausgestaltung ist ein Lüfter im Motor vorgesehen, umfassend Grundkörper und darauf vorgesehene Lüfterflügel, die einstückig als Spritzgussteil ausgeführt und im Lüfter Dauermagnete umspritzt vorgesehen sind. Von Vorteil ist dabei, dass der Lüfter sehr kostengünstig und einfach herstellbar ist als gleichzeitiger Winkellagengeber.

Bei einer vorteilhaften Ausgestaltung sind die Dauermagnete derart nahe an der Oberfläche des Grundkörpers angeordnet, dass die Magnete im Grundkörper gehalten sind, insbesondere auch beim Betreiben des Motors. Von Vorteil ist dabei, dass die Magnete sehr starke Signale abgeben und somit bei naher Anordnung der Sensoren an dem beschriebenen Oberflächenbereich eine sehr gutes Signal-Rauschverhältnis erreichbar ist.

Erfindungsgemäß ist axial beabstandet vom Lüfter eine elektronische Schaltung vorgesehen, die Sensoren umfasst welche in Wirkverbindung mit den Magneten stehen, wobei die Sensoren das Magnetfeld der sich vorbei bewegenden Magnete detektieren. Von Vorteil ist dabei, dass die Sensoren mit der Schaltung integriert auf einer Leiterplatte ausführbar sind und somit direkt die Sensorsignale auswertbar sind. Auf diese Weise ist dann die Information erzeugbar. Als Sensoren sind auch Kombinationen von Wiegandsensoren mit Hallsensoren vorteilhaft.

Die Erfindung wird nun anhand von Abbildungen näher erläutert:

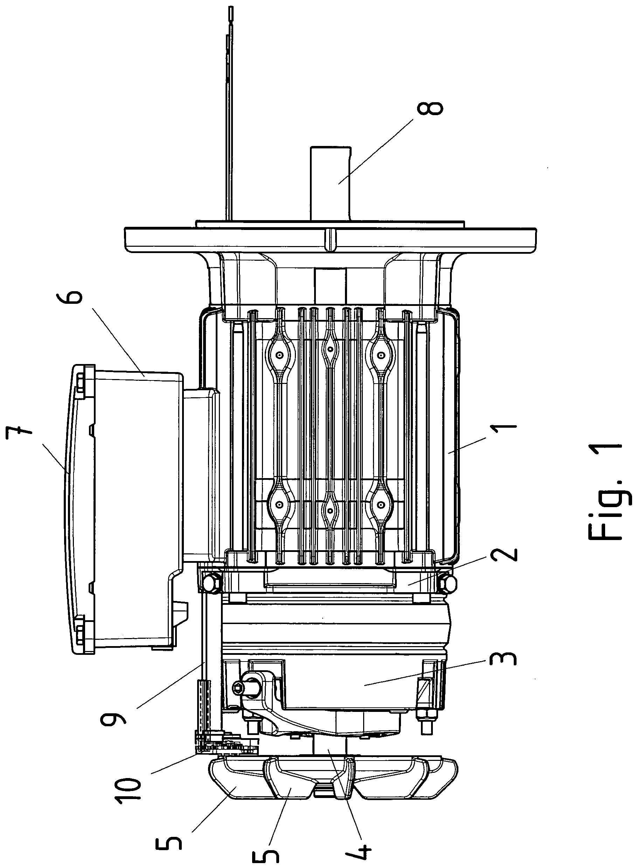

In der Figur 1 ist ein erfindungsgemäßer Elektromotor gezeigt, dessen Statorgehäuse 1 an seinem B-seitigen axialen Endbereich mit dem Motorflansch 2 verbunden ist, an dem eine elektromagnetisch betätigbare Bremse 3 vorgesehen ist. Diese umfasst eine bestrombar spule, deren bei Bestromung erzeugtes Magnetfeld auf eine Scheibe derart wirkt, dass eine ebenfalls auf die Scheibe wirkende Federkraft eines Federelements überwunden wird und somit die Scheibe axial bewegbar wird. Auf diese Weise werden Bremsbeläge in Reibkontakt bringbar oder alternativ der Reibkontakt trennbar. Die Bremse ist also elektromagnetisch betätigbar. Abhängig von der Bestromung entsteht also ein Magnetfeld in axialer Richtung, das auch veränderlich ist.

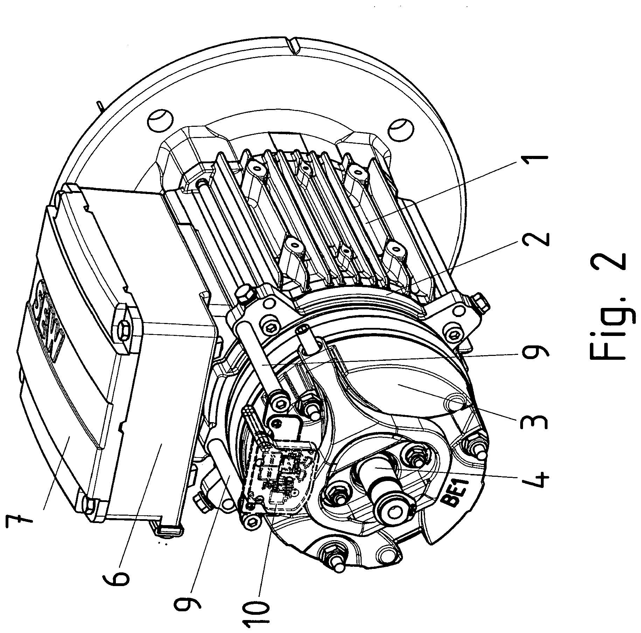

In Figur 2 ist eine Schrägansicht des Motors gezeigt, wobei der Lüfter weggelassen wurde.

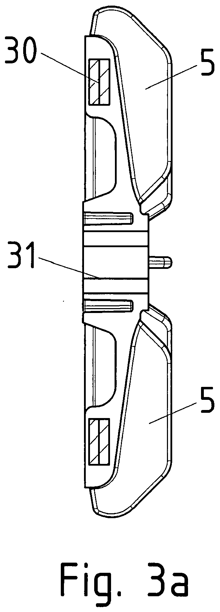

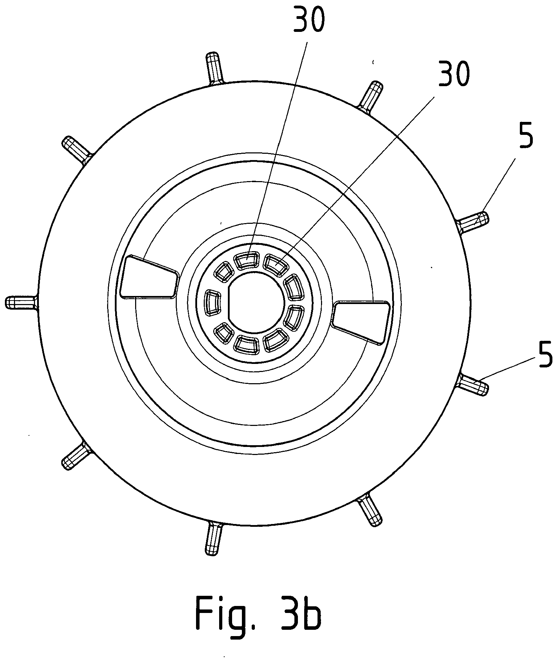

In Figur 3a ist ein Schnitt und in Figur 3b eine Draufsicht des Lüfters gezeigt.

Der Lüfter ist weiter axial als die Bremse abgewandt vom Motor vorgesehen und mit der Motorwelle 4 verbunden, insbesondere kraft- und/oder formschlüssig. Vorzugsweise ist die Verbindung spielfrei ausgeführt.

Mittels der Lüfterflügel 5 wird Luft in axialer Richtung gefördert und der Motor ist durch diese entlang seiner im Statorgehäuse 1 vorgesehenen Rippen kühlbar.

Des Weiteren umfasst der Lüfter in seinem Grundkörper, der kegelstumpfähnlich ausgeführt ist, Permanentmagnete 30. Diese sind im Grundkörper beim Kunststoffspritzgießen des Grundkörpers eingebracht und somit vollständig umspritzt. Dabei ist der geringste Abstand zur Oberfläche derart gewählt, dass genügende Haltekräfte für die Magnete 30, insbesondere im Wesentlichen gerade noch genügende Haltekräfte für die Magnete 30, vorgesehen sind.

Die elektronische Schaltung 10 ist umspritzt ausgeführt und von Abstandsbolzen 9 als Haltemittel am Motorflansch gehalten. Dabei erstrecken sich die Abstandsbolzen über den axialen Bereich der Bremse 3 hinweg, so dass die elektronische Schaltung einerseits am Motorflansch 2 gehalten ist und nicht an der Bremse 3. Andererseits ist es ermöglicht, dass die elektronische Schaltung 10 zwischen Lüfter und Bremse 3 vorgesehen. Die elektronische Schaltung 10 umfasst Sensoren zur Detektion der von den Magneten 30 erzeugten Magnetfeldern. Dabei ist ein erster Teil der Magnete 30 in Umfangsrichtung regelmäßig voneinander beabstandet, ein zweiter Teil der Magnete 30 weist zumindest einen anderen Abstand zu einem nächstbenachbarten Magnet auf. Insbesondere besteht der zweite Teil aus einem einzigen Magneten 30. Bei einem anderen erfindungsgemäßen Ausführungsbeispiel sind alle Magnete 30 hingegen regelmäßig voneinander beabstandet.

Die Sensoren sind derart angeordnet und ihre Signale derart ausgewertet, dass eine Information über die Winkellage des Lüfters bestimmbar ist, insbesondere ist ein absoluter Umdrehungszähler integriert ausgeführt.

Da der Abstand zwischen den Magneten 30 und den Sensoren klein vorgesehen ist, insbesondere kleiner als der Abstand zwischen der Spule der Bremse und den Sensoren der elektronischen Schaltung, ist die Fehlerrate beim Erkennen der von den Magneten 30 verursachten Magnetfeldänderung verringert. Denn die Störstrahlung aus der Bremse heraus ist nur gering. Insbesondere umfasst die Bremse selbst ein Gehäuse, das zumindest einen Teil der Magnetfeldlinien ableitet, und somit verringerte Stör-Magnetfelder austreten.

Durch die Umspritzung mit Kunststoff ist die elektronischen Schaltung, umfassend der Sensoren und Leiterplatte sowie der weiteren Bauelemente, nicht nur gut geschützt sondern auch elektrisch gut isoliert gegen ihre Umgebung. Vorzugswiese ragt die Platine aus dem umspritzten Bereich heraus, wodurch ein Schraubverbindung mit den Haltemitteln 9 vorsehbar ist.

Weiterer Vorteil der Haltemittel 9 ist, dass beim Warten der Bremse die Justierung der elektronischen Schaltung, umfassend die Sensoren. Relativ zu den Magneten des Lüfters nicht wiederholt werden muss, da der Abstand schon durch die Haltemittel festlegbar ist.

Bei einer vorteilhaften Ausführung ist sogar die Bremse wartbar, während die Haltemittel unverändert mit dem Motorflansch verbunden bleiben, bei einer anderen alternativen vorteilhaften Ausführung werden die Haltemittel abmontiert und nach Wartung der Bremse wieder anmontiert an den Motorflansch. Dabei ist dann die Justierung des Abstandes zwischen Magneten und Sensoren wieder hergestellt.

Bei einem weiteren erfindungsgemäßen Ausführungsbeispiel wird die Leiterplatte der elektronischen Schaltung 10 nicht direkt mittels der haltemittel am Motorflansch befestigt sondern die elektronische Schaltung wird an einem Halteblech befestigt, das wiederum mit den Haltemitteln verbunden ist. Somit ist die Befestigung der elektronischen Schaltung stabiler und steifer ausgeführt. Das Halteblech ist außerdem derart zwischen Bremse 3 und elektronischer Schaltung 10 anordenbar und das Material des Haltebleches derart wählbar ist, dass die Sensoren mittels des Haltebleches gegen aus der Bremse austretende Magnetfeldlinien abgeschirmt werden.

Der Lüfter ist auf der Motorwelle **erfindungsgemäß** mittels seiner Wellenaufnahme 31 kraft- und/oder formschlüssig verbunden.

Auf dem Statorflansch ist ein Anschlusskastenunterteil 6 vorgesehen, auf dem ein Anschlusskastendeckel 7 vorgesehen ist.

Das abtriebsseitige Ende der Motorwelle ragt aus dem Motor A-seitig heraus und ist mit dem Bezugszeichen 8 in der Figur 1 versehen.

### Bezugszeichenliste

1 Statorgehäuse
2 Motorflansch
3 Bremse, elektromagnetisch betätigbar
4 Motorwelle
5 Lüfterflügel
6 Anschlusskastenunterteil
7 Anschlusskastendeckel
8 Motorwelle
9 Abstandsbolzen als Haltemittel
10 umspritzte elektronische Schaltung
31 Wellenaufnahme
30 Dauermagnete

## Patentansprüche

1. Elektromotor, umfassend eine Bremse (3) und einen Lüfter,
**wobei** der Lüfter, umfassend Grundkörper und darauf vorgesehene Lüfterflügel (5), einstückig als Spritzgussteil ausgeführt ist **und am Lüfter Dauermagnete (30) vorgesehen sind,**
**wobei axial beabstandet vom Lüfter eine elektronische Schaltung** (10) **vorgesehen ist, die Sensoren umfasst welche in Wirkverbindung mit den** Magneten (30) **stehen, wobei die Sensoren das Magnetfeld der sich vorbei drehenden** Magnete (30) **detektieren,**
**wobei der Lüfter auf der Motorwelle mittels Wellenaufnahme kraft- und/oder formschlüssig verbunden ist,**
**dadurch gekennzeichnet, dass**
**die Dauermagnete (30) im Lüfter umspritzt vorgesehen sind,**
**wobei die elektronische Schaltung** (10) **axial beabstandet vom Lüfter vorgesehen ist, die mittels Haltemitteln am Motorflansch (2) befestigt ist, der mit dem Statorgehäuse (1) des Motors verbunden ist,**
**wobei die Haltemittel sich über einen größeren axialen Bereich als die Bremse (3) erstrecken und diese somit überbrücken und eine Masseverbindung für die elektronische Schaltung** (10) **darstellen.**

2. Elektromotor nach Anspruch 1,
**dadurch gekennzeichnet, dass**
die elektronische Schaltung (10) mit einem Halteblech lösbar verbunden ist, das mit den Haltemitteln verbunden ist.

3. Elektromotor nach mindestens einem der vorangegangenen Ansprüche,
**dadurch gekennzeichnet, dass**
dass die Haltemittel in den Motorflansch (2) eingeschraubt vorgesehen sind, insbesondere wobei die Haltemittel als Stegbolzen ausgeführt sind.

4. Elektromotor nach mindestens einem der vorangegangenen Ansprüche,
**dadurch gekennzeichnet, dass**
Mittel zur Bestimmung der Winkellage und/oder der Anzahl von Umdrehungen des Lüfters vorgesehen sind, insbesondere die von der elektronischen Schaltung (10) umfasst sind oder im Anschlusskasten des Motors vorgehen sind.

5. Elektromotor nach Anspruch 4,
**dadurch gekennzeichnet, dass**
die Mittel zur Bestimmung **der Winkellage** aus dem vorbeidrehenden Magneten (30) versorgbar sind, insbesondere Wiegandsensoren umfassen und/oder eine elektronische Schaltung (10) in FRAM Technik.

6. Elektromotor nach mindestens einem der vorangegangenen Ansprüche,
**dadurch gekennzeichnet, dass**
die elektrischen Leitungen der elektronischen Schaltung (10), umfassend die Leitungen zur Herausführung der detektierten Sensorsignale oder die Leitung zur Herausführung der Information über Winkellage und/oder Anzahl von Umdrehungen, in die Bremse (3) geführt sind und mit den die Bremse (3) versorgenden und/oder steuernden Leitungen in den Anschlusskasten geführt sind.

7. Elektromotor nach mindestens einem der vorangegangenen Ansprüche,
**dadurch gekennzeichnet, dass**
der Anschlusskasten des Motors eine Ausnehmung aufweist zur Durchführung einer Busleitung und/oder der Anschlusskasten eine elektronische Schaltung (10) mit der Funktionalität eines Umrichters, Sanftanlaufgeräts und/oder Motorschalters umfasst.

8. Elektromotor nach mindestens einem der vorangegangenen Ansprüche,
**dadurch gekennzeichnet, dass**
**ein** Umrichter den Motor versorgt und einen Drehzahlregler umfasst, dem die Informationen aus der die Sensoren umfassenden elektronischen Schaltung (10) als Istwert zugeführt wird.

9. Elektromotor nach mindestens einem der vorangegangenen Ansprüche,
**dadurch gekennzeichnet, dass**
die Dauermagnete (30) derart nahe an der Oberfläche des Grundkörpers angeordnet sind, dass die Magnete (30) im Grundkörper gehalten sind, insbesondere auch beim Betreiben des Motors.

## Claims

1. Electric motor comprising a brake (3) and a fan,
the fan, which comprises a main body and fan blades (5) provided thereon, being designed in a single piece as an injection moulded part and permanent magnets (30) being provided on the fan, an electronic circuit (10) being provided at an axial spacing from the fan and comprising sensors that are operatively connected to the magnets (30), the sensors detecting the magnetic field of the magnets (30) rotating past them, the fan being frictionally connected and/or integrally bonded to the motor shaft by means of a shaft support,
**characterised in that**
the permanent magnets (30) are provided in the fan in an overmoulded manner, the electronic circuit (10) being at an axial spacing from the fan and being attached by retaining means to the motor flange (2), which is connected to the stator housing (1) of the motor, the retaining means extending over a larger axial range than the brake (3) and thus bypassing said brake and forming an earth connection for the electronic circuit (10).

2. Electric motor according to claim 1,
**characterised in that**
the electronic circuit (10) is releasably connected to a retaining plate connected to the retaining means.

3. Electric motor according to at least one of the preceding claims,
**characterised in that**
the retaining means are provided screwed into the motor flange (2), the retaining means in particular being designed as stud pins.

4. Electric motor according to at least one of the preceding claims,
**characterised in that**
means for determining the angular position and/or the number of revolutions of the fan are provided, said means in particular being comprised by the electronic circuit (10) and/or being provided in the motor junction box.

5. Electric motor according to claim 4,
**characterised in that**
the means for determining the angular position can be powered by the magnets (30) rotating past them and in particular comprise Wiegand sensors and/or an electronic circuit (10) using FRAM technology.

6. Electric motor according to at least one of the preceding claims,
**characterised in that**
the electrical lines of the electronic circuit (10), including the lines for outputting the detected sensor signals or the line for outputting the information on the angular position and/or number of revolutions, are guided into the brake (3) and are guided into the junction box together with the lines that power and/or control the brake (3).

7. Electric motor according to at least one of the preceding claims,
**characterised in that**
the motor junction box has a recess for feeding through a bus line and/or the junction box comprises an electronic circuit (10) having the functionality of a converter, a soft-start device and/or a motor control switch.

8. Electric motor according to at least one of the preceding claims,
**characterised in that**
a converter powers the motor and comprises a speed regulator, to which the information from the electronic circuit (10) comprising the sensors is supplied as an actual value.

9. Electric motor according to at least one of the preceding claims,
**characterised in that**
the permanent magnets (30) are arranged close to the surface of the main body in such a way that the magnets (30) are retained in the main body, in particular also when the motor is in operation.

## Revendications

1. Moteur électrique comprenant un frein (3) et un ventilateur,
sachant que ledit ventilateur, incluant un corps de base et des ailettes (5) prévues sur celui-ci, est réalisé d'un seul tenant en tant que pièce venue de moulage par injection, et que des aimants permanents (30) sont prévus sur ledit ventilateur,
un circuit électronique (10), prévu axialement à distance dudit ventilateur,
étant muni de capteurs en liaison opérante avec les aimants (30),
lesquels capteurs détectent le champ magnétique desdits aimants (30) tournant en vis-à-vis,
ledit ventilateur étant relié à l'arbre moteur, par engagement positif et/ou par complémentarité de formes, au moyen d'un logement d'arbre,
**caractérisé par le fait que**
les aimants permanents (30) sont prévus à l'état enrobé par injection dans le ventilateur, le circuit électronique (10)
étant prévu à distance axiale dudit ventilateur
et étant fixé, à l'aide de moyens de retenue, à la bride (2) du moteur qui est reliée au carter statorique (1) dudit moteur,
lesquels moyens de retenue couvrent une région axiale plus grande que celle du frein (3), coiffent par conséquent ce dernier, et se présentent comme une connexion à la terre dédiée audit circuit électronique (10).

2. Moteur électrique selon la revendication 1,
**caractérisé par le fait que**
le circuit électronique (10) est relié, de manière libérable, à une tôle de retenue reliée aux moyens de retenue.

3. Moteur électrique selon au moins l'une des revendications précédentes,
**caractérisé par le fait que**
les moyens de retenue sont prévus avec intégration par vissage dans la bride (2) du moteur, lesdits moyens de retenue étant notamment réalisés sous la forme de goujons de bridage.

4. Moteur électrique selon au moins l'une des revendications précédentes,
**caractérisé par**
la présence de moyens qui sont affectés à la détermination de la position angulaire et/ou du nombre de tours du ventilateur, sont notamment intégrés dans le circuit électronique (10), ou sont prévus dans le boîtier de raccordement du moteur.

5. Moteur électrique selon la revendication 4,
**caractérisé par le fait que**
les moyens affectés à la détermination de la position angulaire peuvent être alimentés à partir de l'aimant (30) tournant en vis-à-vis,
et comprennent notamment des capteurs Wiegand et/ou un circuit électronique (10) à technologie FRAM.

6. Moteur électrique selon au moins l'une des revendications précédentes,
**caractérisé par le fait que**
les conducteurs électriques du circuit électronique (10), incluant les conducteurs dévolus à la délivrance des signaux de capteurs détectés, ou le conducteur dévolu à la délivrance de l'information relative à la position angulaire et/ou au nombre de tours, gagnent le frein (3) et gagnent le boîtier de raccordement avec les conducteurs alimentant et/ou pilotant ledit frein (3).

7. Moteur électrique selon au moins l'une des revendications précédentes,
**caractérisé par le fait que**
le boîtier de raccordement dudit moteur est doté d'un évidement, en vue du passage d'une ligne de bus, et/ou ledit boîtier de raccordement inclut un circuit électronique (10) doué de la fonctionnalité d'un convertisseur, d'un appareil de démarrage en douceur et/ou d'un interrupteur dudit moteur.

8. Moteur électrique selon au moins l'une des revendications précédentes,
**caractérisé par le fait**
**qu'**un convertisseur alimente ledit moteur et inclut un régulateur de vitesse angulaire auquel les informations, émanant du circuit électronique (10) renfermant les capteurs, sont délivrées en tant que valeur réelle.

9. Moteur électrique selon au moins l'une des revendications précédentes,
**caractérisé par le fait que**
les aimants permanents (30) sont disposés, à proximité de la surface du corps de base, de façon telle que lesdits aimants (30) soient retenus dans ledit corps de base, en particulier également au cours du fonctionnement dudit moteur.
